# EUROPEAN PATENT SPECIFICATION

(11) **EP 0 254 279 B1**
(45) Date of publication and mention of the grant of the patent: **20.10.1993**
(21) Application number: 87110565.6
(22) Date of filing: 21.07.1987
(51) Int. Cl.: G11B 27/30, G11B 20/10

(54) **Rotary head type recording and/or reproducing apparatus**
Aufzeichnungs- und/oder Wiedergabegerät vom Typ mit rotierenden Köpfen
Appareil d'enregistrement et/ou de reproduction du type à têtes rotatives

(30) Priority: 22.07.1986 JP 172562/86
(43) Date of publication of application: 27.01.1988
(73) Proprietor: SONY CORPORATION, Tokyo 141 (JP)
(72) Inventor: Sekiguchi, Fukunori, Shinagaewa-ku Tokyo (JP); Maruyama, Yukihiro, Shinagaewa-ku Tokyo (JP); Tsubaki, Masami, Shinagaewa-ku Tokyo (JP); Ebata, Kazuyoshi, Shinagaewa-ku Tokyo (JP); Odaka, Kentaro, Shinagaewa-ku Tokyo (JP)
(74) Representative: TER MEER STEINMEISTER & PARTNER GbR

(56) References cited:
- EP-A- 0 175 941
- EP-A- 0 187 029
- US-A- 4 175 267
- An AUDIO ENGINEERING SOCIETY REPRINT 2168 (C-6) Presented at the 76th Convention, 8-11 October 1984, AUDIO ENGINEERING SOCIETY, NEW YORK, USA, LAGADEC: "LINKING DIGITAL AUDIO AND TIME CODE"

## Description

The present invention relates to a rotary head type recording and reproducing apparatus having the capability of recording time code information.

When recording or reproducing digital information data together with time code information, there arises the problem that the usual formats, used to format digital information data, in general, have another time period than the usual formats used for formating time code signal data. E. g. in the R-DAT standard, which is a format for digital information data, the data segment frequency is 100/3 Hz, whereas in the SMPTE time code standard the frame frequency is 30 Hz. Therefore, in general the beginning of an information data segment will not coincide with the beginning of a time code signal frame.

SMPTE time code signals are recorded in frames, each frame comprising 80 bits. Of these 80 bits, 16 bits are associated to a time code synchronising signal, and the remaining 64 bits are related to a time code information signal. This time code information signal may be converted into time code data to be recorded on a recording medium.

In the R-DAT standard, digital information data are recorded in tracks, each track comprising one data segment or 196 data blocks. Among these 196 blocks there are two sub-code areas in which the same sub-code information is recorded, each area having 8 blocks. Each block comprises 288 bits, among which 256 bits are reserved for sub-code data and parity data. A data ID in each block indicates the kind of data stored in the sub-code block. When the data ID is "0000", this means that pack data exist within the data area of the block. Such pack data may be time code data, as illustrated in Fig. 6. According to Fig. 6, the pack format consists of an item area of 4 bits and a data and parity area of 60 bits. In other words, the pack format is formed of 8 symbols of PC1 to PC8, in which the upper 4 bits of the symbol PC1 are assigned to the item area, the symbol PC8 is assigned to the parity area, and the others are assigned to the data area.

Time code data, as they are illustrated by Fig. 6, can only indicate the hour, the minute, the second, and the frame number of a time code frame which started within the segment which stores the time code data as illustrated by Fig. 6. However, it is not known whether the actual time code frame started during e. g. the tenth or e. g. the hundredth block within the actual segment. Therefore, no accurate time relation is provided between the synchronisation of the information data, as recorded in segments, and the time code signals, as provided in frames.

To overcome the just mentioned disadvantage, it is known to record not only time code data together with information data, but also time code markers which indicate at which sample (e. g. at which block) a time code frame started within an information data interval (e. g. within a segment). Such a method is described by R. Lagadec in AUDIO ENGINEERING SOCIETY PREPRINT 2168 (C-6), presented at the 26th convention, Oct. 8 - 11, 1984, AUDIO ENGINEERING SOCIETY NEW YORK, USA under the title "LINKING DIGITAL AUDIO AND TIME CODE". The just mentioned author is the inventor of an apparatus as described in the document EP-A3-0 175 941, which apparatus comprises a counter means which is reset as soon as a time code generator starts a new time code frame, and which counts the number of recording units (e. g. blocks), which are recorded till the end of the actual data information sector (e. g. a data information segment).

It is the object of the present invention to provide an apparatus for recording and reproducing digital data in common with time code data and time code marker data, which apparatus has simple construction.

The apparatus of the present invention has the features as listed in the claim as enclosed.

In contrast to the prior art, the apparatus of the present invention does not measure the position of the beginning of a time code frame within an information data segment, but it measures the position of the beginning of an information data segment within a time code frame. This gives more accurate data than in the prior art, as in general several segments are started within one time code frame, but, correspondingly a time code frame is only started after several segments. Therefore, with the apparatus of the present invention, accurate time code markers indicating the timing relation between the time code signal and the information data are recorded and reproduced more often than when using a prior art apparatus.

The invention will now be illustrated by the detailed description of an embodiment, to be read in conjunction with the accompanying drawings.
Fig. 1 is a block diagram showing the main portion of an embodiment of an apparatus according to the present invention;
Fig. 2 is a diagram showing a pack format of time code data within a sub-code block of an R-DAT data segment;
Fig. 3A to 3D are time related charts used to explain the operation of the apparatus shown in Fig. 1 upon recording;
Fig. 4A to 4D are time related charts used to explain the operation of the apparatus shown in Fig. 1 upon reproducing; and

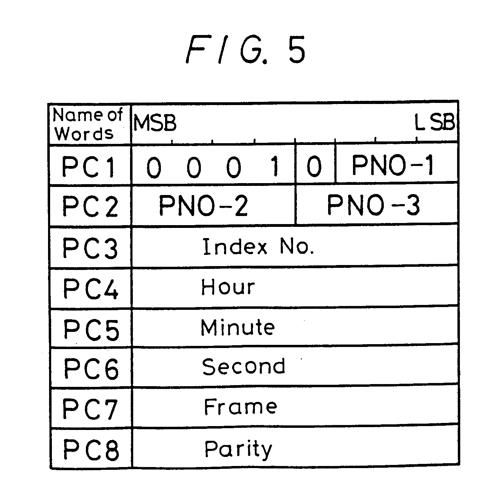

Fig. 5 is a diagram corresponding to the diagram of Fig. 2, however for the prior art.

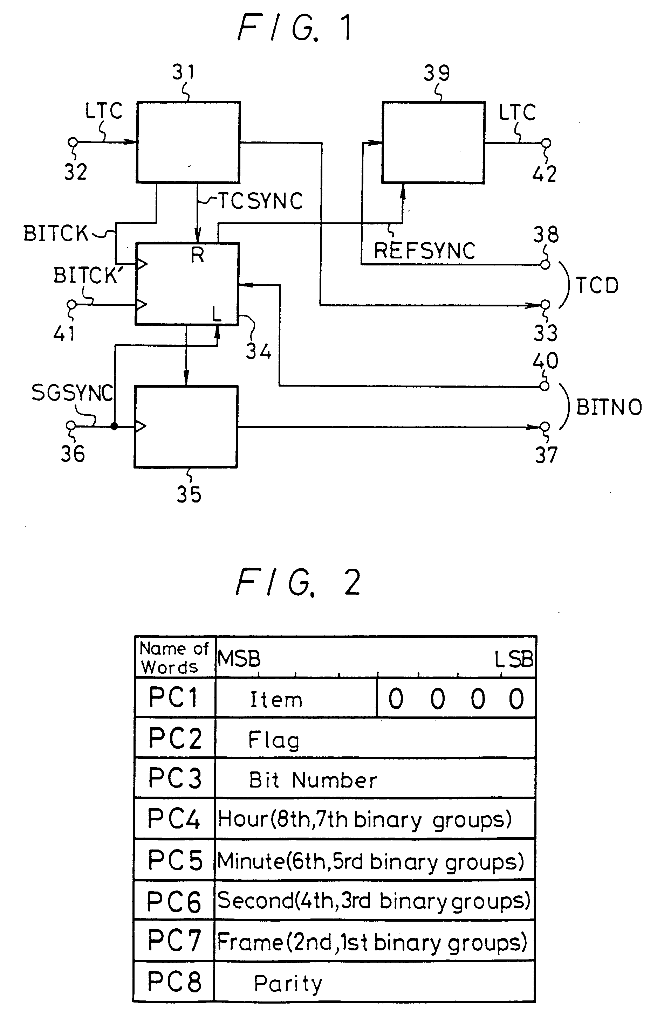

Fig. 1 shows a time code signal decoding circuit 31 which receives an SMPTE time code signal LTC from a terminal 32 when the R-DAT is placed in the recording mode. Time code data TCD such as "hour code", "minute code", "second code", "frame code" and so on generated from the time code signal decoding circuit 31 are supplied to a terminal 33. From this terminal 33, time code data TCD are supplied to a sub-code encoder of the R-DAT.

There is provided a counter 34 which receives a time code synchronizing signal TCSYNC from the time code signal decoding circuit 31 at one frame period (30 Hz) as a reset signal upon recording. Upon recording, 80 bit clocks BITCK per frame are generated from the time code signal decoding circuit 31 and then fed to a clock input terminal of the counter 34.

Further, there is provided a latch circuit 35, and this latch circuit 35 receives the count output from the counter 34. A segment synchronizing signal SGSYNC of 100/3 Hz synchronized with the revolution of the rotary heads of the R-DAT is supplied to a terminal 36. This segment synchronizing signal SGSYNC is formed by dividing, for example, a master clock of the R-DAT. The segment synchronizing signal SGSYNC is supplied from the terminal 36 to the clock terminal of the latch circuit 35.

The output signal from the latch circuit 35 is supplied to a terminal 37, and from this terminal 37, this output signal is supplied to the sub-code encoder (not shown) of the R-DAT as bit number data BITNO.

A time code TC* including, for example, "hour code", "minute code", "second code", "frame code", "bit number" and so on is formed on the basis of the time code data TCD (added with one frame in practice) from the time code signal decoding circuit 31 and the bit number data BITNO from the latch circuit 35. This time code TC* is recorded on the sub-code data area of the aforementioned sub-code block as pack data. Fig. 2 illustrates the pack format thereof. The pack format is determined by an item which is not defined yet. In Fig. 2, a flag indicates various bit informations (drop frame flag, color flag, etc.) that the time code LTC has. The bit number is written in the symbol PC3. If two kinds of items are used, a user bit (binary group) of the time code LTC can be recorded. Accordingly, 80-bit information of time code LTC can all be recorded and reproduced.

To a terminal 38, there are supplied time code data TCD which are obtained from a sub-code decoder of the R-DAT upon reproducing. This time code data TCD from the terminal 38 is supplied to a time code signal generating circuit 39. At the same time, the bit number data BITNO from the sub-code decoder is applied to a terminal 40 and then fed to the counter 34.

The segment synchronizing signal SGSYNC applied to the terminal 36 is also fed to a load terminal L of the counter 34. Then, the bit number data BITNO is set in the counter 34 at this timing.

To a terminal 41, there are supplied 80 bit clocks BITCK' per frame when the R-DAT is set in the reproducing mode. The bit clock BITCK' is formed by dividing, for example, the master clock of the R-DAT. This bit clock BITCK' from the terminal 41 is supplied to the clock input terminal Of the counter 34. In this case, the counter 34 outputs a carry pulse when the count value thereof is changed from 79 to 0. This carry pulse is supplied to the time code signal generating circuit 39 as a reference synchronizing signal REFSYNC.

The time code signal generating circuit 39 generates an SMPTE time code LTC based on the time code data TCD (being added with one frame in practice) supplied from the terminal 38 at the timing of the reference synchronizing signal REFSYNC. This SMPTE time code LTC is delivered to a terminal 42.

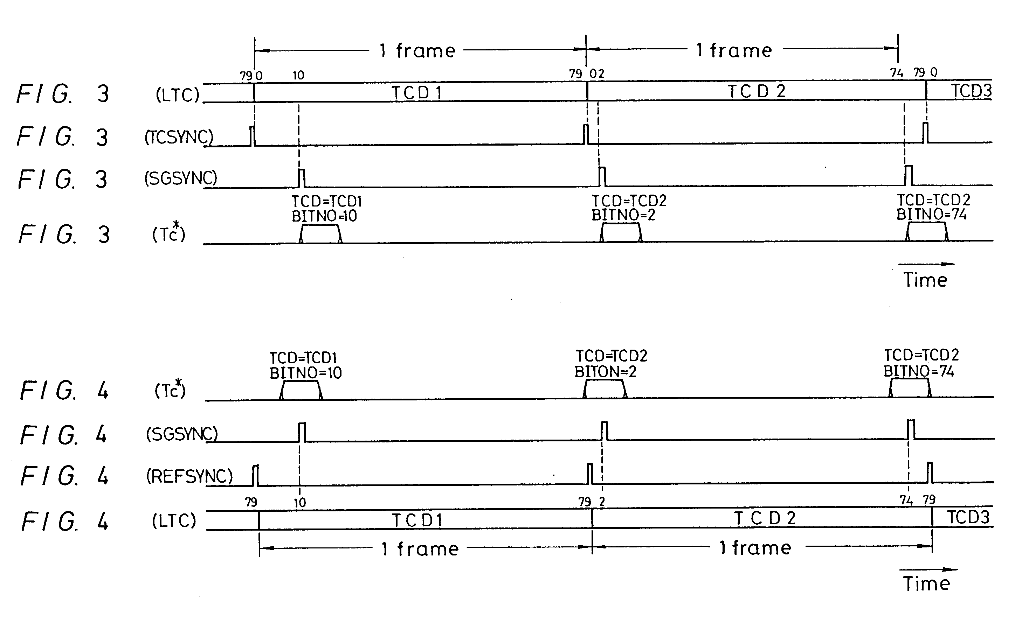

When the R-DAT is placed in the recording mode, the SMPTE time code signal LTC is supplied to the terminal 32 at the timing shown in Fig. 3A. In Fig. 3A, references TCD1, TCD2, ..., designate time code data of respective frames and 0 to 79 designate bit numbers.

In this case, the time code synchronizing signal TCSYNC is supplied from the time code signal decoding circuit 31 to the reset terminal R of the counter 34 in response to the end of each frame, or the sync word of time code LTC, as shown in Fig. 3B. Accordingly, the count value of the counter 34 is changed in coincidence with the bit number of the time code LTC.

Under this state, if the segment synchronizing signal SGSYNC is supplied to the terminal 36 at timing shown in Fig. 3C, the count value of the counter 34 is sequentially latched by the latch circuit 35 at the same timing.

Then, the sub-code encoder of the R-DAT generates the time code TC* on the basis of the time code data TCD supplied from the time code signal decoding circuit 31 and the bit number data BITNO supplied from the latch circuit 35. This time code TC* is recorded on the sub-code data area of the sub-code as pack data (see Fig. 2) at timing shown in Fig. 3D.

When the R-DAT is placed in the reproducing mode, the time code TC* is reproduced by the R-DAT at timing shown in Fig. 4A. Then, the sub-code decoder generates the time code data TCD and the bit number data BITNO corresponding to the time code TC* which are then fed to the terminals 38 and 40, respectively.

Under this state, if the segment synchronizing signal SGSYNC is supplied to the terminal 36 at timing shown in Fig. 4B, the count value of the counter 34 is set equal to the bit number data BITNO. As a result, the carry pulse is generated from the counter 34 as shown in Fig. 4C and then fed to the time code signal generating circuit 39 as the reference synchronizing signal REFSYNC.

Accordingly, the time code signal generating circuit 39 generates the SMPTE time code signal LTC at timing shown in Fig. 4D.

According to this embodiment, as described above, the timing relationship between the time code signal LTC and the segment synchronizing signal SGSYNC (see Figs. 3A and 3C) supplied upon recording becomes equal to the timing relationship between the time code signal LTC and the segment synchronizing signal SGSYNC (see Figs. 4B and 4D) generated upon reproducing. Therefore, according to this embodiment, since the time code information which is not synchronized with the revolution of the rotary head can be recorded on and reproduced from the recording track, even when the revolution of the rotary head is made quite special, the edition can be made with high accuracy and a track exclusively used by the time code becomes unnecessary.

While the SMPTE time code is explained as the example of the time code information recorded in the longitudinal direction of the magnetic tape, other time codes can be employed similarly in this invention.

While the present invention is applied to the R-DAT as described above, the present invention can also be applied to other recording and/or reproducing apparatus similarly. In other words, the present invention is particularly suitable for use with a recording and/or reproducing apparatus using a time code signal which is not synchronized with the revolution of the rotary head.

## Claims

1. An apparatus for recording and reproducing digital data in common with time code data and time code marker data, comprising:
- a synchronizing signal input terminal (36), active in the recording mode and the reproducing mode, for receiving a digital data synchronizing signal (SGSYNC);
- means for recording said digital data in common with said time code data (TCD) as supplied to a time code data output terminal (33), and bit number data (BITNO), acting as said time code marker data, as supplied to a bit number output terminal (37), onto a recording medium, and for reproducing data from said recording medium, thereby receiving time code data (TCD) from a time code data input terminal (38), and bit number data (BITNO) from a bit number input terminal (40);
- a time code signal input terminal (32), acting in the recording mode, for receiving a time code signal (LTC) including a time code synchronizing signal and a time code information signal, each having a predetermined number of bits, and having together a predetermined sum of bits;
- a time code signal decoding means (31), acting in the recording mode, for decoding said time code signal (LTC), thereby generating a control signal (TCSYNC) corresponding to said time code synchronizing signal, time code data (TCD) corresponding to said time code information signal and being output to said time code data output terminal (33), and a bit clock signal (BITCK) corresponding to the bit period of said time code signal;
- a counter means (34), acting in the recording mode and the reproducing mode, and
-- having the following functions in the recording mode: it is reset by the control signal (TCSYNC) as output by said time code signal decoding means (31), and it counts the bit clocks of the bit clock signal (BITCK) as output by said time code signal decoding means (31); and
-- having the following functions in the reproducing mode: it receives the reproduced bit number data (BITNO) from said bit number input terminal (40) and loads the actually received bit number as soon as it receives said digital data synchronizing signal (SGSYNC) from said synchronizing signal input terminal (36), it counts a bit clock signal (BITCK') as received from a bit clock input terminal (41) by starting from the loaded bit number, and it outputs a carry signal (REFSYNC) as soon as its count value corresponds to said predetermined sum of bits of the time code signal (LTC);
- a latch means (35), acting in the recording mode, receiving the count value of said counter means (34), for latching the actual count value and outputting it to said bit number output terminal (37) when receiving the digital synchronizing signal (SGSYNC) from said synchronizing signal input terminal (36); and
- a time code signal generating means (39), acting in the reproducing mode, receiving said time code data (TCD) from said time code data input terminal (38), and formating them into a time code signal (LTC) when receiving said carry signal (REFSYNC) from said counter means (34).

## Patentansprüche

1. Gerät zum Aufzeichnen und Wiedergeben digitaler Daten gemeinsam mit Zeitcodedaten und Zeitcodemarkierungsdaten, mit:
- einem Synchronisiersignaleingangsanschluß (36), der im Aufzeichnungsmodus und im Wiedergabemodus aktiv ist, um ein Digitaldatensynchronisiersignal (SGSYNC) zu empfangen;
- einer Einrichtung zum Aufzeichnen der digitalen Daten gemeinsam mit den Zeitcodedaten (TCD), wie sie einem Zeitcodedaten-Ausgangsanschluß (33) zugeführt werden, und eines Bitzahldatenwerts (BITNO), der als Zeitcodemarkierungsdatenwert wirkt, wie er einem Bitzahlausgangsanschluß (37) zugeführt wird, auf ein Aufzeichnungsmedium, und zum Wiedergeben von Daten vom Aufzeichnungsmedium, wobei Zeitcodedaten (TCD) von einem Zeitcodedaten-Eingangsanschluß (38) und ein Bitzahldatenwert (BITNO) von einem Bitzahleingangsanschluß (40) erhalten werden;
- einem Zeitcodesignal-Eingangsanschluß (38), der im Aufzeichnungsmodus wirkt, um ein Zeitcodesignal (LTC) einschließlich eines Zeitcodesynchronisiersignals und eines Zeitcodeinformationssignals zu empfangen, von denen jedes eine vorgegebene Bitzahl aufweist, und die zusammen eine vorgegebene Bitsumme aufweisen;
- einer Zeitcodesignal-Decodiereinrichtung (31), die im Aufzeichnungsmodus wirkt, um das Zeitcodesignal (LTC) zu decodieren, um dadurch ein Steuersignal (TCSYNC), das dem Zeitcodesynchronisiersignal entspricht, Zeitcodedaten (TCD), die dem Zeitcodeinformationssignal entsprechen und an den Zeitcodedaten-Ausgangsanschluß (33) ausgegeben werden, und ein Bittaktsignal (BITCK) zu erzeugen, das der Bitperiode des Zeitcodesignals entspricht;
- einer Zählereinrichtung (34), die im Aufzeichnungsmodus und im Wiedergabemodus wirkt, und die
-- im Aufzeichnungsmodus die folgenden Funktionen aufweist: sie wird durch das Steuersignal (TCSYNC) rückgesetzt, wie es von der Zeitcodesignal-Decodiereinrichtung (31) ausgegeben wird, und sie zählt die Bittakte des Bittaktsignals (BITCK), wie es von der Zeitcodesignal-Decodiereinrichtung (31) ausgegeben wird; und
-- im Wiedergabemodus die folgenden Funktionen aufweist: sie empfängt den wiedergegebenen Bitzahldatenwert (BITNO) vom Bitzahleingangsanschluß (40) und lädt die aktuell empfangene Bitzahl sobald sie das Digitaldaten-Synchronisiersignal (SGSYNC) vom Synchronisiersignaleingangsanschluß (36) empfängt, sie zählt ein Bittaktsignal (BITCK'), wie es von einem Bittakteingangsanschluß (41) empfangen wird, ausgehend von der geladenen Bitzahl, und sie gibt ein Übertragsignal (REFSYNC) aus, sobald ihr Zählwert der vorgegebenen Bitsumme des Zeitcodesignals (LTC) entspricht;
- einer Signalspeichereinrichtung (35), die im Aufzeichnungsmodus wirkt und den Zählwert der Zählereinrichtung (34) empfängt, um den aktuellen Zählwert festzuhalten und ihn an den Bitzahlausgangsanschluß (37) auszugeben, wenn sie das Digitalsynchronisiersignal (SGSYNC) vom Synchronisiersignaleingangsanschluß (36) empfängt; und
- einer Zeitcodesignal-Erzeugungseinrichtung (39), die im Wiedergabemodus wirkt und die Zeitcodedaten (TCD) vom Zeitcodedateneingangsanschluß (38) empfängt und sie in ein Zeitcodesignal (LTC) formatiert, wenn sie das Übertragsignal (REFSYNC) von der Zählereinrichtung (34) empfängt.

## Revendications

1. Appareil pour enregistrer et reproduire des données numériques en commun avec des données de code temporel et des données de marqueur de code temporel, comprenant :
- une borne d'entrée du signal de synchronisation (36), active en mode enregistrement et en mode reproduction, pour recevoir un signal de synchronisation de données numériques (SGSYNC);
- un dispositif pour enregistrer lesdites données numériques en commun avec lesdites données de code temporel (TCD) lorsqu'elles sont appliquées à une borne de sortie de données de code temporel (33), et des données du numéro de bit (BITNO), agissant comme desdites données d'un marqueur de code temporel, lorsqu'elles sont appliquées à une borne de sortie de numéro de bit (37), sur un support d'enregistrement, et pour reproduire les données à partir dudit support d'enregistrement, recevant ainsi les données du code temporel (TCD) à partir d'une borne d'entrée de données de code temporel (38), et les données de numéro de bit (BITNO) à partir d'une borne d'entrée de numéro de bit (40);
- une borne d'entrée du signal temporel (32), agissant en mode enregistrement, pour recevoir un signal du code temporel (LTC) comportant un signal de synchronisation de code temporel et un signal d'information de code temporel, ayant chacun un nombre prédéterminé de bits, et ayant ensemble une somme prédéterminée de bits;
- un dispositif de décodage du signal de code temporel (31), agissant en mode enregistrement, pour décoder ledit signal de code temporel (LTC), générant ainsi un signal de commande (TCSYNC) correspondant audit signal de synchronisation du code temporel, les données de code temporel (TCD) correspondant audit signal d'information de code temporel et étant appliqué à ladite borne de sortie de données de code temporel (33), et un signal de bit d'horloge (BITCK), correspondant à la période de bit dudit signal de code temporel;
- un dispositif de comptage (34), agissant en mode enregistrement et en mode reproduction, et
-- ayant les fonctions suivantes en mode enregistrement : il est remis à zéro par le signal de commande (TCSYNC) comme sortie dudit dispositif de décodage du signal de code temporel (31), et il compte les bits d'horloge du signal de bit d'horloge (BITCK) comme sortie dudit dispositif de décodage du signal de code temporel (31); et
-- ayant les fonctions suivantes en mode de reproduction :
il reçoit les données du numéro de bit reproduit (BITNO) par ladite borne d'entrée de numéro de bit (40) et charge le numéro de bit reçu actuellement dès qu'il reçoit ledit signal de synchronisation de données numériques (SGSYNC) par ladite borne d'entrée du signal de synchronisation (36), il compte un signal de bit d'horloge (BITCK) lorsqu'il est reçu par une borne d'entrée de bit d'horloge (41) en commençant par le numéro du bit chargé, et il délivre un signal de report (REFSYNC) dès que sa valeur de comptage correspond à ladite somme prédéterminée des bits du signal du code temporel (LTC);
- un dispositif de verrouillage (35), agissant en mode enregistrement, recevant la valeur de comptage dudit dispositif de comptage (34), pour verrouiller la valeur de comptage réelle et pour la fournir à ladite borne de sortie de numéro de bit (37) lors de la réception du signal de synchronisation numérique (SGSYNC) de ladite borne d'entrée du signal de synchronisation (36); et
- un dispositif générant un signal de code temporel (39), agissant en mode reproduction, recevant lesdites données de code temporel (TCD) de ladite borne d'entrée de données de code temporel (38), et les formatant en signal de code temporel (LTC) lors de la réception dudit signal de report (RFSYNC) par ledit dispositif de comptage (34).
